# EUROPEAN PATENT SPECIFICATION

(11) **EP 4 328 869 B1**
(45) Date of publication and mention of the grant of the patent: **19.02.2025**
(21) Application number: 22191993.9
(22) Date of filing: 24.08.2022
(51) Int. Cl.: G06V 20/58

(54) **METHOD FOR HIGHLIGHTING A VEHICLE IN AN IMAGE BEING PROVIDED BY A REARVIEW CAMERA, DATA PROCESSING APPARATUS, DIGITAL REARVIEW SYSTEM, VEHICLE, COMPUTER PROGRAM AND COMPUTER-READABLE STORAGE MEDIUM**
VERFAHREN ZUM HERVORHEBEN EINES FAHRZEUGS IN EINEM BILD EINER RÜCKBLICKKAMERA, DATENVERARBEITUNGSVORRICHTUNG, DIGITALES RÜCKBLICKSYSTEM, FAHRZEUG, COMPUTERPROGRAMM UND COMPUTERLESBARES SPEICHERMEDIUM
PROCÉDÉ DE SURLIGNAGE D'UN VÉHICULE DANS UNE IMAGE FOURNIE PAR UNE CAMÉRA DE RÉTROVISEUR, APPAREIL DE TRAITEMENT DE DONNÉES

(43) Date of publication of application: 28.02.2024
(73) Proprietor: Volvo Car Corporation, 40531 Göteborg (SE)
(72) Inventor: BERGLIN, Frederik, 40531 Göteborg (SE)
(74) Representative: Maiwald GmbH

(56) References cited:
- US-A1- 2017 372 176
- US-A1- 2021 201 085
- US-A1- 2022 097 689

## Description

The present disclosure relates to a method for highlighting a vehicle in an image being provided by a rearview camera of a digital rearview system.

The present disclosure is further directed to a data processing apparatus comprising means for carrying out the above method, a digital rearview system, and a vehicle comprising a digital rearview system.

Additionally, the present disclosure relates to a computer program and a computer-readable storage medium.

Digital rearview systems for vehicles, especially cars and trucks are known. In contrast to a purely optical rearview system which essentially use a mirror for the observation of a rearward traffic situation, digital rearview systems use a rearview camera being configured to capture an image of a traffic situation behind the respective vehicle. These images may be transmitted to a display device of the digital rearview system which is configured to display these images to a driver of the vehicle being equipped with such a digital rearview system.

Beyond that, US 2021/0201085 A1 discloses a vehicular system for testing the performance of a headlamp detection system. The testing system comprises a trained model or trained neural network that is able to artificially add headlights in images which do not show headlights when being input into the trained model or trained neural network. US 2022/097689 discloses a system for providing alert notifications of possible vehicle contact events which includes a display configured to highlight an image of the nearby vehicle in response to the control signal.

It is an objective of the present disclosure to improve such digital rearview systems in that the visibility of objects forming part of the traffic situation behind the vehicle is enhanced.

The problem is at least partially solved or alleviated by the subject matter of the independent claims of the present disclosure, wherein further examples are incorporated in the dependent claims.

According to a first aspect, there is provided a method for highlighting a vehicle in an image being provided by a rearview camera of a digital rearview system. The method comprises:
- receiving an image of a traffic situation comprising a frontal view of the vehicle,
- recognizing at least one headlight of the vehicle in the image,
- determining whether the at least one headlight is lit up,
- accentuating an image portion of the image, wherein the image portion represents the at least one headlight, if it is determined that the at least one headlight is not lit up,
- providing the image including the accentuated image portion to a display device.

If a vehicle in the image being provided by the rearview camera of the digital rearview system is highlighted by accentuating the image portion representing the at least one headlight, the visibility of this vehicle is enhanced. Consequently, a driver of the vehicle being equipped with the digital rearview system is able to detect the vehicle in the image with higher ease and reliability. The detection may also happen very quickly. This enhances road safety. It is noted that the vehicle which is equipped with the digital rearview system on which the present method may be run is different from the vehicle being shown in the image which is provided by the rearview camera of the digital rearview system. In this context, the traffic situation is a traffic situation which is arranged in the rear of the vehicle which is equipped with the digital rearview system. This traffic situation may be designated as a rearward traffic situation. Furthermore, the frontal view includes all the views which show the front of the rearward vehicle, i.e. fully frontal and partially frontal views are covered. Moreover, accentuating the image portion representing the at least one headlight means to make this image portion more prominent and therefore more noticeable for a user of the digital rearview system. This manner of highlighting the vehicle in the rearview mirror is very natural, i.e. it does not unnecessarily distract the driver of the vehicle comprising the rearview system. This also enhances road safety.

It is noted that the method according to the present disclosure is especially useful in a case in which the vehicle performing the method drives in an environment with little or no light, i.e. a dark environment. Moreover, the method according to the present disclosure is especially advantageous if the vehicle in the image is of a dark color.

According to an example, the method according to the present disclosure is terminated in a case in which the at least one headlight is determined to be lit up.

The received image of a traffic situation comprising the frontal view of the vehicle may be a standing or moving image. In other words, the received image may be a picture or a video.

In an example, recognizing at least one headlight of the vehicle in the image comprises applying an object recognition technique. Using such a technique leads to a quick and reliable recognition of the at least one headlight. Applying the object recognition technique for example comprises applying an artificial neural network being trained to recognize the headlights in the image or applying a machine learning technique being configured to recognize the headlights in the image.

In an example, determining whether the at least one headlight is lit up comprises assessing whether a color of the image portion representing the at least one headlight exceeds a predefined color threshold or falls below a predefined color threshold. Additionally or alternatively, determining whether the at least one headlight is lit up comprises assessing whether a brightness of the image portion representing the at least one headlight exceeds a predefined brightness threshold. In this context, the predefined color threshold may be defined as a wavelength threshold or a frequency threshold. Alternatively the color threshold may be defined as an RGB-threshold. In all of these examples, the color threshold may divide a color space into a portion of comparatively bright colors and a portion of comparatively dark colors. In a case in which the color of the image portion representing the at least one headlight is attributed to the portion of the color space relating to comparatively bright colors, it is determined that the headlight is lit up. Otherwise, it is determined that the headlight is not lit up. Also a brightness threshold may divide a brightness space into a portion of comparatively high brightness and a portion of comparatively low brightness. In a case in which the color of the image portion representing the at least one headlight is attributed to the portion of comparatively high brightness, it is determined that the headlight is lit up. Otherwise, it is determined that the headlight is not lit up. In this context, the brightness threshold may be defined as an average brightness of the received image. Thus, if the image portion representing the at least one headlight is brighter than the average brightness of the image, it is determined that the headlights are lit up. Otherwise, it is determined that the headlights are not lit up. In another example, the brightness threshold may be application-specific. In any one of these examples, one may determine whether the at least one headlight is lit up with a high reliability.

In an example, accentuating the image portion representing the at least one headlight comprises lightening the color of the image portion and/or increasing a brightness of the image portion. Lightening a color is to be understood in that a color of the image portion representing the at least one headlight is amended into a lighter color. Preferable light colors are light yellow and white. Increasing the brightness of the image portion representing the at least one headlight means that the radiation intensity of the light sources being attributed to this image portion is increased. Of course, lightening of the color and increasing the brightness may be combined. For example, an image portion representing the at least one headlight has a dark gray color in the original image. In order to accentuate this image portion, the color may be amended to white and the radiation intensity may be doubled.

According to an example, the method further comprising defining a brightness transition zone surrounding the accentuated image portion. Inside the brightness transition zone, the brightness is decreasing in a direction away from the accentuated image portion. In other words, within the brightness transition zone, the brightness gradually decreases from the brightness of the accentuated image portion to the brightness of the original image. Using such a brightness transition zone has the effect that the accentuated image portion resembles to a captured headlight being lit up to an increased extent. Thus, for a driver the image comprising the accentuated image portion appears to be more natural. This further reduces the distraction of a driver by the provided image.

According to an example, the method further comprises detecting whether the recognized at least one headlight is moving. The image portion representing the at least one headlight is accentuated, if it is determined that the at least one headlight is moving. Put otherwise, the headlight is only accentuated for moving vehicles, not for vehicles being at a standstill, e.g. parked. Consequently, the visibility of moving vehicles is enhanced while the visibility of non-moving vehicles is not amended with respect to the original image. A driver may thus more easily focus on moving vehicles. Moreover, the driver does not need to be concerned with distinguishing moving vehicles over non-moving vehicles. This further increases road safety.

Whether the recognized at least one headlight is moving, may be determined by comparing two images which have been captured by the digital rearview system at different points in time. If in these images a size of at least one headlight or a size of the vehicle has not changed, it may be determined that the vehicle and the at least one headlight being represented in the image do not move relative to the vehicle performing the method and comprising the digital rearview system. If the size of the headlights or the vehicle in the image has increased, it may be determined that the headlights and the corresponding vehicle are moving towards the vehicle performing the method and comprising the digital rearview system. If the size of the headlights or the vehicle in the image has decreased, it may be determined that the headlights and the corresponding vehicle are moving away from the vehicle performing the method and comprising the digital rearview system. It is noted that these movements are relative movements of the vehicle performing the method and the vehicle being shown in the image and comprising the at least one headlight. From a time difference between the two images and a difference in size of the at least one headlight or the vehicle shown in the images, a relative speed may be determined. Additionally, a current speed of the vehicle performing the method and comprising the digital rearview system needs to be considered in order to determine whether the vehicle being shown in the image and the corresponding at least one headlight are moving in absolute terms. In the present method, the image portion representing the at least one headlight is accentuated, if it is determined that the at least one headlight is moving in absolute terms.

In an example, the method further comprises determining a color of the vehicle in the image, wherein the image portion representing the at least one headlight is accentuated, if the color of the vehicle exceeds a predefined color threshold or falls below a predefined color threshold. Also in this context, the color threshold may be defined as outlined above. This means that also in the present context, the current threshold divides a color space into a portion of comparatively light colors and a portion of comparatively dark colors. Consequently, the image portion representing the at least one headlight may only be accentuated if the color of the vehicle is determined to belong to the portion of comparatively dark colors. It is known that vehicles of comparatively dark color are more difficult to be visually detected as compared to vehicles of comparatively light color. Thus, the method may be performed in a situation, where the visibility of vehicles of comparatively light color is sufficient and the visibility of vehicles of comparatively dark color is to be improved. Thereby, unnecessary distraction of the driver is avoided.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method according to the present disclosure. When using such a data processing apparatus, a vehicle in the image being provided by the rearview camera of the digital rearview system is highlighted by accentuating the image portion representing the at least one headlight. Thus, the visibility of this vehicle is enhanced. Consequently, a driver is able to detect the vehicle in the image with higher ease and reliability. This enhances road safety.

According to a third aspect, there is provided a digital rearview system. The digital rearview system comprises a rearview camera being configured to capture an image of a traffic situation comprising a frontal view of a vehicle. Moreover, the digital rearview system comprises a data processing apparatus according to the present disclosure being communicatively connected to the rearview camera such that the image captured by the rearview camera is receivable by the data processing apparatus. Additionally, the digital rearview system comprises a display device being communicatively connected to the data processing apparatus such that the image modified by the data processing apparatus is receivable by the display device and being configured to provide the modified image to a driver. Thus, when using such a digital rearview system, a vehicle being positioned rearward with respect to the vehicle being equipped with the digital rearview system and being captured in the image being provided by the rearview camera of the digital rearview system is highlighted by accentuating the image portion representing the at least one headlight. Thus, the visibility of this vehicle is enhanced. Consequently, a driver is able to detect the vehicle in the image with higher ease and reliability. This enhances road safety.

According to a fourth aspect, there is provided a vehicle comprising a digital rearview system according to the present disclosure. The display device of the digital rearview system is arranged in a passenger compartment of the vehicle. A driver of such a vehicle is able to detect a vehicle forming part of a rearward traffic situation with high ease and reliability. This enhances road safety. This is especially useful in a case in which the vehicle drives in an environment with little or no light, i.e. a dark environment, or in a case in which the vehicle in the rearward traffic situation is of a dark color.

According to a fifth aspect, there is provided a computer program comprising instructions which, when the program is executed by a computer, cause the computer to carry out the method according to the present disclosure. Thus, a vehicle in an image being provided by the rearview camera of the digital rearview system may be highlighted by accentuating the image portion representing the at least one headlight. Consequently, the visibility of this vehicle is enhanced and a driver is able to detect the vehicle in the image with higher ease and reliability. This enhances road safety.

According to a sixth aspect, there is provided a computer-readable storage medium comprising instructions which, when executed by a computer, cause the computer to carry out the method according to the present disclosure. Also by the computer-readable storage medium, a vehicle in an image being provided by the rearview camera of the digital rearview system is highlighted by accentuating the image portion representing the at least one headlight. Consequently, the visibility of this vehicle is enhanced and a driver is able to detect the vehicle in the image with higher ease and reliability. This enhances road safety.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows a vehicle according to the present disclosure being equipped with a digital rearview system according to the present disclosure having a data processing apparatus according to the present disclosure, a computer-readable storage medium according to the present disclosure and a computer program according to the present disclosure, wherein the data processing apparatus is also represented in an enlarged view,
- Figure 2 (a): shows an image being received by the data processing apparatus of Figure 1,
- Figure 2 (b): shows the image of Figure 2 (a) in a modified state in which it is provided to a driver of the vehicle of Figure 1 by the digital rearview system of Figure 1, and
- Figure 3: illustrates steps of a method for highlighting a vehicle in an image being provided by a rearview camera of a digital rearview system according to the present disclosure.

The figures are merely schematic representations and serve only to illustrate examples of the disclosure. Identical or equivalent elements are in principle provided with the same reference signs.

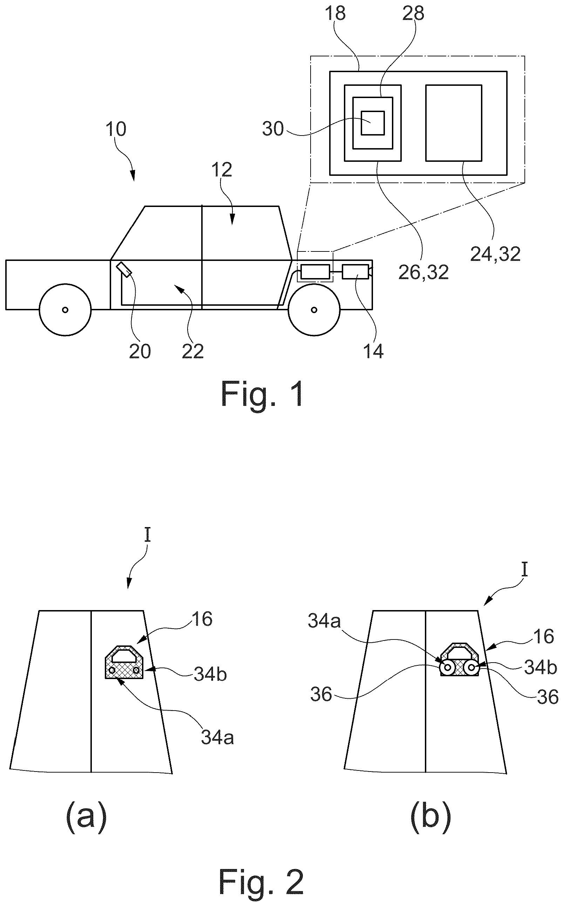

Figure 1 shows a vehicle 10 comprising a digital rearview system 12.

The digital rearview system 12 has a rearview camera 14 being installed in the back of the vehicle 10 facing rearwards.

Thus, the rearview camera 14 is configured to capture an image I of a traffic situation in the back of the vehicle 10. If a vehicle 16 is travelling behind the vehicle 10, the captured image I comprises a frontal view of the vehicle 16 (cf. Figures 2 (a)).

The vehicle 16 may also be called a surrounding vehicle.

The digital rearview system 12 also comprises a data processing apparatus 18 which is communicatively connected to the rearview camera 14. Thus, the image I captured by the rearview camera 14 is receivable by the data processing apparatus 18.

Moreover, the digital rearview system 12 comprises a display device 20 which is communicatively connected to the data processing apparatus 18.

The display device 20 is arranged in a passenger compartment 22 of the vehicle 10.

Figure 1 also shows an enlarged view of the data processing apparatus 18. Details of the data processing apparatus 18 can be seen in this enlarged view.

The data processing apparatus 18 comprises a data processing unit 24 and a data storage unit 26.

The data storage unit 26 comprises a computer-readable storage medium 28 and on the computer-readable storage medium 28 a computer program 30 is provided. The computer program comprises instructions which, when executed by the data processing unit 24 or more generally a computer, cause the computer to carry out a method for highlighting a vehicle in an image being provided by a rearview camera 14 of the digital rearview system 12.

Due to the fact that the data processing apparatus 18 is communicatively connected to the display device 20, the display device 20 is configured to receive the image I in a condition in which it has been modified by the data processing apparatus 18. Using the display device 20, this image I may be provided to a driver of the vehicle 10.

More generally speaking, the data processing unit 24 and a data storage unit 26 form means 32 for carrying out the method for highlighting a vehicle in an image being provided by a rearview camera 14 of a digital rearview system 12.

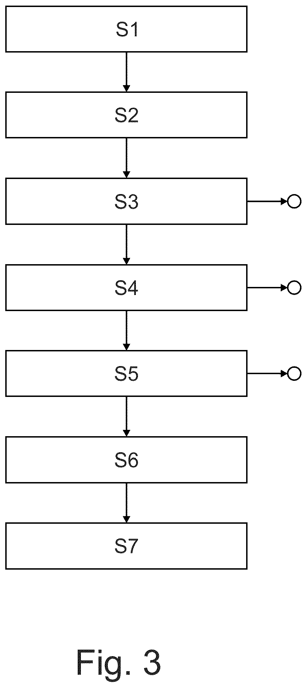

In the following, this method will be explained with reference to Figures 2 (a), 2 (b) and 3.

In a first step S1, an image I of a traffic situation comprising a frontal view of the vehicle 16 is received at the data processing apparatus 18. This image I is captured by the rearview camera 14 and may correspond to the image shown in Figure 2 (a).

Thereafter, in a second step S2, the headlights 34a, 34b of the vehicle 16 in the image are recognized. This is done by using an object recognition technique.

In an optional third step S3, it is detected whether the recognized headlights 34a, 34b are moving. If so, the method is continued. If the recognized headlights 34a, 34b are not moving, the method is abandoned.

In a further optional fourth step S4, a color of the vehicle 16 in the image I is determined. The determined color is compared to a color threshold which is provided on the data storage unit 26. As has already been explained before, the color threshold divides a color space into a portion of comparatively light colors and a portion of comparatively dark colors. If the determined color falls within the portion of comparatively light colors, the method is abandoned. Otherwise, the method is continued.

Then, in a fifth step S5, it is determined whether the headlights 34a, 34b are lit up.

To this end, a color of the image portion representing the headlights 34a, 34b is assessed. Again, the assessed color is compared to a corresponding color threshold which divides a color space into a portion of comparatively light colors and a portion of comparatively dark colors. If the determined color falls within the portion of comparatively light colors, it is determined, that the headlights 34a, 34b are lit up and the method is abandoned. Otherwise, it is determined that the headlights 34a, 34b are not lit up and the method is continued.

It is noted that the color thresholds used for the determination whether the headlights 34a, 34b are lit up and for the assessment of the color of the vehicle 16are different.

Additionally, during step S5, a brightness of the image portion representing the headlights 34a, 34b is assessed. The image portion is a portion of the image I. To this end, a brightness of this image portion is determined and compared to a predefined brightness threshold.

The brightness threshold defines a border between a predefined high brightness and a predefined low brightness. If the determined brightness falls within the predefined high brightness, the headlights 34a, 34b are considered to be lit up and the method is abandoned. Otherwise, the headlights 34a, 34b are considered not to be lit up and the method is continued.

If the headlights 34a, 34b are determined not to be lit up, the image portion representing the headlights 34a, 34b is accentuated in a sixth step S6.

The accentuation may be done according to several variants.

In a first variant, the color of the image portion representing the headlight 34a, 34b is lightened. For example, the color is changed from grey to white.

In a second variant, the brightness of the image portion representing the headlight 34a, 34b is increased. In this variant, the color may be maintained.

Of course, it is also possible to combine these variants, i.e. to lighten the color and increase the brightness.

When accentuating the image portion representing the headlights 34a, 34b additionally a brightness transition zone 36 may be defined. The brightness transition zone 36 is a zone of decreasing brightness surrounding the accentuated image portion. The brightness is decreasing from a level of the accentuated image portion towards a brightness of the surrounding, non-accentuated image portions.

In a seventh step S7, the image I comprising the accentuated portion and the brightness transition zone 36 is provided to the display device 20. Thus, the driver of the vehicle 10 can easily and quickly detect the vehicle 16 forming part of a rearward traffic situation.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: digital rearview system
- 14: rearview camera
- 16: vehicle
- 18: data processing apparatus
- 20: display device
- 22: passenger compartment
- 24: processing unit
- 26: data storage unit
- 28: computer-readable storage medium
- 30: computer program
- 32: means
- 34a: headlight
- 34b: headlight
- 36: brightness transition zone

- I: image
- S1: first step
- S2: second step
- S3: third step
- S4: fourth step
- S5: fifth step
- S6: sixth step
- S7: seventh step

## Claims

1. A method for highlighting a vehicle (16) in an image (I) being provided by a rearview camera (14) of a digital rearview system (12), comprising:
- receiving an image (I) of a traffic situation comprising a frontal view of the vehicle (16) (S1),
- recognizing at least one headlight (34a, 34b) of the vehicle (16) in the image (I) (S2),
- determining whether the at least one headlight (34a, 34b) is lit up (S5),
- accentuating an image portion of the image (I), wherein the image portion represents the at least one headlight (34a, 34b) and providing the image (I) including the accentuated image portion to a display device (20) (S7), if it is determined that the at least one headlight (34a, 34b) is not lit up (S6), or terminating the method if it is determined that the at least one headlight (34a, 34b) is lit up.

2. The method according to claim 1, wherein recognizing at least one headlight (34a, 34b) of the vehicle (16) in the image (I) comprises applying an object recognition technique.

3. The method according to claim 1 or 2, wherein determining whether the at least one headlight (34a, 34b) is lit up comprises
assessing whether a color of the image portion representing the at least one headlight (34a, 34b) exceeds a predefined color threshold or falls below a predefined color threshold and/or
assessing whether a brightness of the image portion representing the at least one headlight (34a, 34b) exceeds a predefined brightness threshold.

4. The method according to any one of the preceding claims, wherein accentuating the image portion representing the at least one headlight (34a, 34b) comprises lightening the color of the image portion and/or increasing a brightness of the image portion.

5. The method according to any one of the preceding claims, further comprising defining a brightness transition zone (36) surrounding the accentuated image portion, wherein inside the brightness transition zone (36) the brightness is decreasing in a direction away from the accentuated image portion.

6. The method according to any one of the preceding claims, further comprising detecting whether the recognized at least one headlight (34a, 34b) is moving (S3),
wherein the image portion representing the at least one headlight (34a, 34b) is accentuated, if it is determined that the at least one headlight (34a, 34b) is moving or wherein the method is terminated if it is determined that the at least one headlight (34a, 34b) is not moving.

7. The method according to any one of the preceding claims, further comprising determining a color of the vehicle (16) in the image (I) (S4),
wherein the image portion representing the at least one headlight (34a, 34b) is accentuated, if the color of the vehicle (16) is determined to belong to the portion of comparatively dark colors or wherein the method is terminated if the color of the vehicle (16) is determined to belong to the portion of comparatively light colors, wherein a color threshold divides a color space into a portion of comparatively light colors and a portion of comparatively dark colors.

8. A data processing apparatus (18) comprising means (32) for carrying out the method according to any one of the preceding claims.

9. A digital rearview system (12), comprising:
- a rearview camera (14) being configured to capture an image (I) of a traffic situation comprising a frontal view of a vehicle (16),
- a data processing apparatus (18) according to claim 8 being communicatively connected to the rearview camera (14) such that the image (I) captured by the rearview camera (14) is receivable by the data processing apparatus (18), and
- a display device (20) being communicatively connected to the data processing apparatus (18) such that the image (I) modified by the data processing apparatus (18) is receivable by the display device (20) and being configured to provide the modified image (I) to a driver.

10. A vehicle (10) comprising a digital rearview system (12) according to claim 9, wherein the display device (20) is arranged in a passenger compartment (22) of the vehicle (10).

11. A computer program (30) comprising instructions which, when the program is executed by a computer, cause the computer to carry out the method of any one of claims 1 to 7.

12. A computer-readable storage medium (28) comprising instructions which, when executed by a computer, cause the computer to carry out the method of any one of claims 1 to 7.

## Patentansprüche

1. Verfahren zum Hervorheben eines Fahrzeugs (16) in einem Bild (I), das durch eine Rückblickkamera (14) eines digitalen Rückblicksystems (12) bereitgestellt wird, umfassend:
- Empfangen eines Bildes (I) einer Verkehrssituation, das eine Frontansicht des Fahrzeugs (16) umfasst (S1),
- Erkennen mindestens eines Scheinwerfers (34a, 34b) des Fahrzeugs (16) in dem Bild (I) (S2),
- Bestimmen, ob der mindestens eine Scheinwerfer (34a, 34b) leuchtet (S5),
- Akzentuieren eines Bildabschnitts des Bildes (I), wobei der Bildabschnitt den mindestens einen Scheinwerfer (34a, 34b) darstellt, und Übermitteln des Bildes (I), das den akzentuierten Bildabschnitt umfasst, an eine Anzeigevorrichtung (20) (S7), wenn bestimmt wird, dass der mindestens eine Scheinwerfer (34a, 34b) nicht leuchtet (S6), oder Beenden des Verfahrens, wenn bestimmt wird, dass der mindestens eine Scheinwerfer (34a, 34b) leuchtet.

2. Verfahren nach Anspruch 1, wobei das Erkennen mindestens eines Scheinwerfers (34a, 34b) des Fahrzeugs (16) in dem Bild (I) das Anwenden einer Objekterkennungstechnik umfasst.

3. Verfahren nach Anspruch 1 oder 2, wobei das Bestimmen, ob der mindestens eine Scheinwerfer (34a, 34b) leuchtet, umfasst:
Beurteilen, ob eine Farbe des Bildabschnitts, der den mindestens einen Scheinwerfer (34a, 34b) darstellt, eine vordefinierte Farbschwelle überschreitet oder eine vordefinierte Farbschwelle unterschreitet, und/oder
Beurteilen, ob eine Helligkeit des Bildabschnitts, der den mindestens einen Scheinwerfer (34a, 34b) darstellt, eine vordefinierte Helligkeitsschwelle überschreitet.

4. Verfahren nach einem der vorangehenden Ansprüche, wobei das Akzentuieren des Bildabschnitts, der den mindestens einen Scheinwerfer (34a, 34b) darstellt, ein Aufhellen der Farbe des Bildabschnitts und/oder ein Erhöhen einer Helligkeit des Bildabschnitts umfasst.

5. Verfahren nach einem der vorangehenden Ansprüche, des Weiteren umfassend das Definieren einer Helligkeitsübergangszone (36), die den akzentuierten Bildabschnitt umgibt, wobei innerhalb der Helligkeitsübergangszone (36) die Helligkeit in einer Richtung von dem akzentuierten Bildabschnitt fort abnimmt.

6. Verfahren nach einem der vorangehenden Ansprüche, des Weiteren umfassend das Detektieren, ob sich der erkannte mindestens eine Scheinwerfer (34a, 34b) bewegt (S3), wobei der Bildabschnitt, der den mindestens einen Scheinwerfer (34a, 34b) darstellt, akzentuiert wird, wenn bestimmt wird, dass sich der mindestens eine Scheinwerfer (34a, 34b) bewegt, oder wobei das Verfahren beendet wird, wenn bestimmt wird, dass sich der mindestens eine Scheinwerfer (34a, 34b) nicht bewegt.

7. Verfahren nach einem der vorangehenden Ansprüche, des Weiteren umfassend das Bestimmen einer Farbe des Fahrzeugs (16) in dem Bild (I) (S4),
wobei der Bildabschnitt, der den mindestens einen Scheinwerfer (34a, 34b) darstellt, akzentuiert wird, wenn bestimmt wird, dass die Farbe des Fahrzeugs (16) zu dem Abschnitt von vergleichsweise dunklen Farben gehört, oder wobei das Verfahren beendet wird, wenn bestimmt wird, dass die Farbe des Fahrzeugs (16) zu dem Abschnitt von vergleichsweise hellen Farben gehört, wobei eine Farbschwelle einen Farbraum in einen Abschnitt von vergleichsweise hellen Farben und einen Abschnitt von vergleichsweise dunklen Farben unterteilt.

8. Datenverarbeitungsvorrichtung (18), die ein Mittel (32) zum Ausführen des Verfahrens nach einem der vorangehenden Ansprüche umfasst.

9. Digitales Rückblicksystem (12), umfassend:
- eine Rückblickkamera (14), die dazu eingerichtet ist, ein Bild (I) einer Verkehrssituation aufzunehmen, das eine Frontansicht eines Fahrzeugs (16) umfasst,
- eine Datenverarbeitungsvorrichtung (18) nach Anspruch 8, die kommunikativ mit der Rückblickkamera (14) so verbunden ist, dass das durch die Rückblickkamera (14) aufgenommene Bild (I) durch die Datenverarbeitungsvorrichtung (18) empfangbar ist, und
- eine Anzeigevorrichtung (20), die kommunikativ mit der Datenverarbeitungsvorrichtung (18) so verbunden ist, dass das durch die Datenverarbeitungsvorrichtung (18) modifizierte Bild (I) durch die Anzeigevorrichtung (20) empfangbar ist, und dazu eingerichtet ist, das modifizierte Bild (I) einem Fahrer bereitzustellen.

10. Fahrzeug (10), umfassend ein digitales Rückblicksystem (12) nach Anspruch 9, wobei die Anzeigevorrichtung (20) in einem Fahrgastinnenraum (22) des Fahrzeugs (10) angeordnet ist.

11. Computerprogramm (30), umfassend Instruktionen (30), die, wenn das Programm durch einen Computer ausgeführt wird, den Computer veranlassen, das Verfahren nach einem der Ansprüche 1 bis 7 auszuführen.

12. Computerlesbares Speichermedium (28), umfassend Instruktionen, die, wenn sie durch einen Computer ausgeführt werden, den Computer veranlassen, das Verfahren nach einem der Ansprüche 1 bis 7 auszuführen.

## Revendications

1. Procédé pour mettre en évidence un véhicule (16) dans une image (I) fournie par une caméra de recul (14) d'un système de rétrovision numérique (12), comprenant :
- la réception d'une image (I) d'une situation de circulation comprenant une vue frontale du véhicule (16) (S1),
- la reconnaissance d'au moins un phare (34a, 34b) du véhicule (16) dans l'image (I) (S2),
- la détermination du fait de savoir si l'au moins un phare (34a, 34b) est allumé (S5),
- l'accentuation d'une partie d'image de l'image (I), dans lequel la partie d'image représente l'au moins un phare (34a, 34b) et la fourniture de l'image (I) incluant la partie d'image accentuée à un dispositif d'affichage (20) (S7), s'il est déterminé que l'au moins un phare (34a, 34b) n'est pas allumé (S6), ou la mise fin du procédé s'il est déterminé que l'au moins un phare (34a, 34b) est allumé.

2. Procédé selon la revendication 1, dans lequel la reconnaissance d'au moins un phare (34a, 34b) du véhicule (16) dans l'image (I) comprend l'application d'une technique de reconnaissance d'objet.

3. Procédé selon la revendication 1 ou 2, dans lequel le fait de déterminer si l'au moins un phare (34a, 34b) est allumé comprend
l'évaluation du fait de savoir si une couleur de la partie d'image représentant l'au moins un phare (34a, 34b) dépasse un seuil de couleur prédéfini ou se situe en dessous d'un seuil de couleur prédéfini et/ou
l'évaluation du fait de savoir si une luminosité de la partie d'image représentant l'au moins un phare (34a, 34b) dépasse un seuil de luminosité prédéfini.

4. Procédé selon l'une quelconque des revendications précédentes, dans lequel l'accentuation de la partie d'image représentant l'au moins un phare (34a, 34b) comprend l'éclaircissement de la couleur de la partie d'image et/ou l'augmentation de la luminosité de la partie d'image.

5. Procédé selon l'une quelconque des revendications précédentes, comprenant en outre la définition d'une zone de transition de luminosité (36) entourant la partie d'image accentuée, dans lequel à l'intérieur de la zone de transition de luminosité (36), la luminosité diminue dans une direction opposée à la partie d'image accentuée.

6. Procédé selon l'une quelconque des revendications précédentes, comprenant en outre le fait de détecter si l'au moins un phare reconnu (34a, 34b) bouge (S3),
dans lequel la partie d'image représentant l'au moins un phare (34a, 34b) est accentuée s'il est déterminé que l'au moins un phare (34a, 34b) bouge ou dans lequel le procédé est mis fin s'il est déterminé que l'au moins un phare (34a, 34b) ne bouge pas.

7. Procédé selon l'une quelconque des revendications précédentes, comprenant en outre la détermination d'une couleur du véhicule (16) dans l'image (I) (S4),
dans lequel la partie d'image représentant l'au moins un phare (34a, 34b) est accentuée si la couleur du véhicule (16) est déterminée comme appartenant à la partie de couleurs comparativement sombres ou dans lequel le procédé est mis fin si la couleur du véhicule (16) est déterminée comme appartenant à la partie de couleurs comparativement claires, dans lequel un seuil de couleur divise un espace colorimétrique en une partie de couleurs comparativement claires et une partie de couleurs comparativement sombres.

8. Appareil de traitement de données (18) comprenant des moyens (32) pour mettre en œuvre le procédé selon l'une quelconque des revendications précédentes.

9. Système de rétrovision numérique (12), comprenant :
- une caméra de recul (14) qui est configurée pour capturer une image (I) d'une situation de circulation comprenant une vue frontale d'un véhicule (16),
- un appareil de traitement de données (18) selon la revendication 8, relié en communication à la caméra de recul (14) de telle sorte que l'image (I) capturée par la caméra de recul (14) puisse être reçue par l'appareil de traitement de données (18), et
- un dispositif d'affichage (20) relié en communication à l'appareil de traitement de données (18) de telle sorte que l'image (I) modifiée par l'appareil de traitement de données (18) puisse être reçue par le dispositif d'affichage (20) et configuré pour fournir l'image modifiée (I) à un conducteur.

10. Véhicule (10) comprenant un système de rétrovision numérique (12) selon la revendication 9, dans lequel le dispositif d'affichage (20) est disposé dans un habitacle (22) du véhicule (10).

11. Programme informatique (30) comprenant des instructions qui, lorsque le programme est exécuté par un ordinateur, amènent l'ordinateur à mettre en œuvre le procédé selon l'une quelconque des revendications 1 à 7.

12. Support de stockage lisible par ordinateur (28) comprenant des instructions qui, lorsqu'elles sont exécutées par un ordinateur, amènent l'ordinateur à mettre en œuvre le procédé selon l'une quelconque des revendications 1 à 7.
